# EUROPEAN PATENT APPLICATION

(11) **EP 4 510 475 A1**
(43) Date of publication of application: **19.02.2025**
(21) Application number: 23191924.2
(22) Date of filing: 17.08.2023
(51) Int. Cl.: H04B 17/391

(54) **STATISTICAL PARAMETER MODEL EXTRACTION**

(71) Applicant: Nokia Solutions and Networks Oy, 02610 Espoo (FI)
(72) Inventor: KORPI, Dani Johannes, Tampere (FI); HUTTUNEN, Janne Matti Juhani, Espoo (FI); HONKALA, Mikko Johannes, Espoo (FI)
(74) Representative: Nokia EPO representatives

(57) **Abstract**

According to an example embodiment, a method comprises: obtaining at least one prototype radio channel model; extracting at least one statistical parameter model based at least on the at least one prototype radio channel model, wherein the at least one statistical parameter model corresponds to at least one parameter of the at least one prototype radio channel model; generating at least one synthetic radio channel model realization based at least on the at least one statistical parameter model; and training a wireless model using the at least one synthetic radio channel model.

## Description

### TECHNICAL FIELD

The present application generally relates to the field of wireless communications. In particular, the present application relates to a method, a radio device, and a computer program product.

### BACKGROUND

Wireless models can be used in, for example, radio devices for receiving and/or transmitting radio signal. For example, a wireless model can comprise a machine learning (ML) model trained to perform processing related to the receiving and/or transmission of radio signals. As ML-based transceivers learn based on data, the training data plays an important role in the performance of the transceivers.

### SUMMARY

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

An example embodiment of a method comprises obtaining at least one prototype radio channel model; extracting at least one statistical parameter model based at least on the at least one prototype radio channel model, wherein the at least one statistical parameter model corresponds to at least one parameter of the at least one prototype radio channel model; generating at least one synthetic radio channel model realization based at least on the at least one statistical parameter model; and training a wireless model using the at least one synthetic radio channel model. The method can, for example, provide at least one statistical parameter model that can be used to train an improved wireless model.

In an example embodiment, alternatively or in addition to the above-described example embodiments, the method further comprises validating the trained wireless model using at least one validation radio channel model. The method can, for example, validate the performance of the trained wireless model.

In an example embodiment, alternatively or in addition to the above-described example embodiments, the method further comprises refining the at least one statistical parameter model based on the validation of the trained wireless model. The method can, for example, further improve the at least one statistical parameter model based on the validation.

In an example embodiment, alternatively or in addition to the above-described example embodiments, the at least one prototype radio channel model comprises at least one existing radio channel model and/or at least one radio channel measurement. The method can, for example, efficiently extract the at least one statistical parameter model based on the least one existing radio channel model and/or the at least one radio channel measurement.

In an example embodiment, alternatively or in addition to the above-described example embodiments, the extracting the at least one statistical parameter model based at least on the at least one prototype radio channel model comprises: identifying at least one key parameter of the at least one prototype radio channel model; and extracting the at least one statistical parameter model based at least on the identified at least one key parameter, wherein the at least one statistical parameter model corresponds to the at least one key parameter of the at least one proto-type radio channel model. The method can, for example, efficiently extract the at least one statistical parameter model based on the at least one key parameter.

In an example embodiment, alternatively or in addition to the above-described example embodiments, the method further comprises evaluating the at least one statistical parameter model by comparing samples from the at least one statistical parameter model and samples from the at least one prototype radio channel model. The method can, for example, efficiently evaluate the at least one statistical parameter model.

In an example embodiment, alternatively or in addition to the above-described example embodiments, the comparing samples from the at least one statis-tical parameter model and samples from the at least one prototype radio channel model comprises comparing the samples from the at least one statistical parameter model and the samples from the at least one prototype radio channel model using Kolmogorov-Smirnov test. The method can, for example, efficiently compare the samples from the at least one statistical parameter model and the samples from the at least one prototype radio channel model.

In an example embodiment, alternatively or in addition to the above-described example embodiments, the extracting the at least one statistical parameter model based at least on the at least one prototype radio channel model comprises assigning a probability distribution for the at least one parameter of the at least one prototype radio channel model. The method can, for example, efficiently extract the at least one statistical parameter model.

In an example embodiment, alternatively or in addition to the above-described example embodiments, the training the wireless model using the at least one synthetic radio channel model comprises: generating at least one synthetic radio channel model parameter realization based at least on the at least one synthetic radio channel model; generating a training dataset using the at least one synthetic radio channel model parameter realization; and training the wireless model based at least on the training dataset. The method can, for example, efficiently train the wireless model.

In an example embodiment, alternatively or in addition to the above-described example embodiments, the wireless model comprises a radio receiver model, a radio transmitter model, a physical layer receiver model, and/or a physical layer transmitter model. The method can, for example, provide at least one statistical parameter model that can be used to train an improved physical layer model.

In an example embodiment, alternatively or in addition to the above-described example embodiments, the at least one parameter of the at least one prototype radio channel model comprises at least one of: a line of sight indicator; a number of clusters or multipaths; an azimuth angle spread of departure; an azimuth angle spread of arrival; a zenith angle spread of departure; a zenith angle spread of arrival; a cross-polarization ratio; a delays of the clusters or multipath; a powers of the clusters or multipath; an azimuth angle of departure for each cluster or multipath; an azimuth angle of arrival for each cluster or multipath; a zenith angle of arrival for each cluster or multipath; and/or a zenith angle of departure for each cluster or multipath. The method can, for example, efficiently extract the at least one statistical parameter model based on these parameters.

An example embodiment of a radio device comprises at least one processor and at least one memory comprising computer program code and a trained wireless model obtained using the method according to any example embodiment. The at least one memory and the computer program code are configured to, with the at least one processor, cause the radio device to: receive and/or transmit a radio signal using the trained wireless model.

An example embodiment of a radio receiver comprises means for performing: receive and/or transmit a radio signal using the trained wireless model.

In an example embodiment, alternatively or in addition to the above-described example embodiments, a client device comprises the radio device according to any example embodiment.

In an example embodiment, alternatively or in addition to the above-described example embodiments, a network node device comprises the radio device according to any example embodiment.

An example embodiment of a computer program product comprises program code configured to perform the method according to any of the above example embodiments, when the computer program product is executed on a computer.

### DESCRIPTION OF THE DRAWINGS

The accompanying drawings, which are included to provide a further understanding of the example embodiments and constitute a part of this specification, illustrate example embodiments and together with the description help to explain the principles of the example embodiments. In the drawings:
Fig. 1 illustrates a flow chart representation of a method according to an example embodiment;
Fig. 2 illustrates a flow chart representation of wireless mode training according to an example embodiment;
Fig. 3 illustrates a schematic representation of parameter samples and probability distributions according to an example embodiment;
Fig. 4 illustrates a flow chart representation of statistical parameter model extraction and refinement according to an example embodiment;
Fig. 5 illustrates a flow chart representation of wireless model training according to an example embodiment;
Fig. 6 illustrates a plot representation of simulation results according to an example embodiment;
Fig. 7 illustrates a plot representation of simulation results according to an example embodiment;
Fig. 8 illustrates a plot representation of simulation results according to an example embodiment;
Fig. 9 illustrates a plot representation of simulation results according to an example embodiment;
Fig. 10 illustrates an example embodiment of the subject matter described herein illustrating a radio device;
Fig. 11 illustrates an example embodiment of the subject matter described herein illustrating block diagram of a radio device comprising a wireless model;
Fig. 12 illustrates a comparative example of the subject matter described herein illustrating block diagram of a radio receiver comprising a wireless model for channel estimation;
Fig. 13 illustrates an example embodiment of the subject matter described herein illustrating data flow in a wireless model;
Fig. 14 illustrates another example embodiment of the subject matter described herein illustrating data flow in a wireless model configure for MIMO; and
Fig. 15 illustrates another example embodiment of the subject matter described herein illustrating a table of neural network parameters and a residual network block.

Like reference numerals are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present disclosure may be constructed or utilized. The description sets forth the functions of the example and the sequence of steps for constructing and operating the example. However, the same or equivalent functions and sequences may be accomplished by different example embodiments.

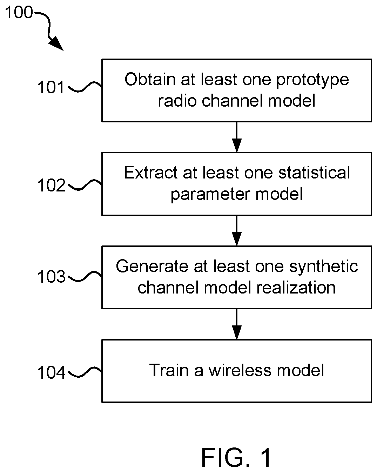

Fig. 1 illustrates a flow chart representation of a method according to an example embodiment.

According to an example embodiment, a method 100 comprises obtaining 101 at least one prototype radio channel model.

Herein, a prototype radio channel model may also be referred to as a prototype model, a prototype channel model, or similar.

In some example embodiments, the at least one prototype radio channel model may comprise a plurality of prototype radio channel models.

The method 100 may further comprise extracting at least one statistical parameter model based at least on the at least one prototype radio channel model, wherein the at least one statistical parameter model corresponds to at least one parameter of the at least one prototype radio channel model.

Herein, a statistical parameter model may also be referred to as a stochastic parameter model, a parameter model, a stochastic model, a stochastic channel model, a stochastic channel parameter model, or similar.

In some example embodiments, the at least one statistical parameter model may comprise a plurality of statistical parameter models.

In some example embodiments, each statistical parameter model may correspond to a parameter of the at least one prototype radio channel model.

The parameters of the at least one statistical parameter model can be randomized to accurately span a realistic/expected channel model space, for example between the prototype radio channel models.

Thus, the method 100 may extract stochastic models for the parameters of the at least one prototype radio channel model. The at least one prototype radio channel model may be obtained from, for example, existing channel models or from channel measurements. This can result in a synthetic channel model that resembles the at least one prototype radio channel model but may not be exactly the same.

The method 100 may further comprise generating 103 at least one synthetic radio channel model realization based at least on the at least one statistical parameter model.

The method 100 may further comprise training 104 a wireless model using the at least one synthetic radio channel model.

The wireless model may comprise, for example, any machine learning (ML) model that can be utilized in receiving and/or transmitting a radio signal. The wireless model may comprise, for example, at least one neural network (NN), at least one convolutional neural network (CNN), and/or any other ML model. The wireless model can also comprise conventional non-learned parts and/or algorithms.

Herein, the wireless model may also be referred to as an ML model, a NN, a CNN, or similar.

The wireless model may be configured to perform, for example, physical layer processing related to wireless signal transmission.

Channel modelling can be an important feature from the perspective of ML-based radio receivers. While the evaluation of, for example, trained ML-based radio receivers can be done similar to any conventional algorithm, using for instance the 3GPP-defined channel models, such a limited set of channel models can be insufficient for training the ML-based radio receiver. Therefore, it can be beneficial to have a method for producing a wide variety of channel responses when training an ML-based radio receiver, since this can result in a robust model capable of performing under various channel conditions. It may not matter whether the training channel model is realistic or not. Instead, the resulting ML model achieving a high performance under realistic channel conditions may be more important.

The method 100 can generate synthetic and stochastic channel models for training wireless models, such as ML-based receivers and/or transmitters operating on the physical layer. It may be enough if the wireless models trained with synthetic channel data are able to operate under real world channel conditions. There may be no need to have any direct correspondence between the at least one statistical parameter model and real-life channel realizations.

A fully learned ML-based receiver may achieve high performance with considerably sparser demodulation reference signal (DMRS) patterns than required by conventional receivers. An ML-based receiver can learn to carry out data-aided detection, where it utilizes the unknown received data symbols to make the detection more accurate. This can be based on the receiver knowing the underlying constellation shape, which is knowledge it may efficiently use to equalize the received signal.

At least in some example embodiments, the method 100 can be used to obtain a more robust wireless model which can operate with unforeseen channel conditions, due to having been trained with more rich radio channel data.

At least in some example embodiments, a small set of radio channel models can be extended to be able to train deep wireless models while reducing the risk of overfitting. This can also allow one to use predefined prototype models for wireless model validation, allowing also direct comparison against conventional algorithms. This can be beneficial since one should avoid training and validating with the same channel models. Thus, without the method 100, one may need to use a subset of predefined models for training, and the remaining ones for validation. With the method 100, one can train with the extended synthetic model, and use the predefined models for validation.

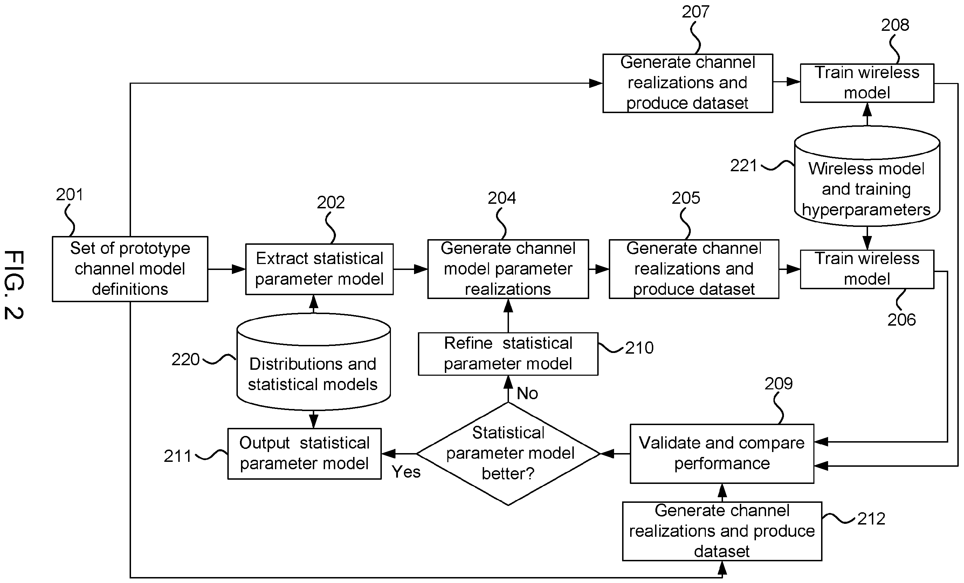

Fig. 2 illustrates a flow chart representation of wireless mode training according to an example embodiment.

For example, in the example embodiment of Fig. 2, operation 202 can comprise extracting at least one statistical parameter model based on a set of prototype channel model definitions 201. Further, there can be a predefined pool or database of statistical models 220, such as distributions or functional descriptions of correlations between different parameters of the at least one prototype radio channel model.

According to an example embodiment, the at least one prototype radio channel model comprises at least one existing radio channel model and/or at least one radio channel measurement.

For example, the at least one prototype radio channel model may comprise at least one cluster delay line (CDL) model.

According to an example embodiment, the extracting 102 the at least one statistical parameter model based at least on the at least one prototype radio channel model comprises identifying at least one key parameter of the at least one prototype radio channel model and extracting the at least one statistical parameter model based at least on the identified at least one key parameter, wherein the at least one statistical parameter model corresponds to the at least one key parameter of the at least one prototype radio channel model.

According to an example embodiment, the extracting the at least one statistical parameter model based at least on the at least one prototype radio channel model comprises assigning a probability distribution for the at least one parameter of the at least one prototype radio channel model.

For example, key parameters of the at least one prototype radio channel model can be identified. Each parameter can be assigned with a probability distribution. For example, distributions for the different scalars can be uniform or normal distribution, where the former can entail the minimum and maximum value, whereas the latter can entail the mean and standard deviation. For CDL models as the at least one prototype radio channel model, the delay vector can be based on gamma distribution, which is parameterized by shape and scale. The power vector can be based on the delay values, being inversely and logarithmically proportional to the delay of the corresponding multipath/cluster. There can also be a Gaussian stochastic component in the power value, introducing randomness.

According to an example embodiment, the training the wireless model using the at least one synthetic radio channel model comprises: generating at least one synthetic radio channel model parameter realization based at least on the at least one synthetic radio channel model; generating a training dataset using the at least one synthetic radio channel model parameter realization; and training the wireless model based at least on the training dataset.

For example, in the example embodiment of Fig. 2, operation 204 can comprise generating channel model parameter realizations and operation 205 can comprise generating channel realizations and producing the training dataset. Operation 206 can comprise training the wireless model 221 using the training dataset. The channel model parameter realizations can comprise, for example, a vector of certain power values for the cluster, drawn from a given distribution. The channel realizations can then comprise the wireless channel coefficients generated using the channel model whose parameters are the realizations mentioned above.

According to an example embodiment, the at least one parameter of the at least one prototype radio channel model comprises at least one of: a line of sight indicator; a number of clusters or multipaths; an azimuth angle spread of departure; an azimuth angle spread of arrival; a zenith angle spread of departure; a zenith angle spread of arrival; a cross-polarization ratio; a delays of the clusters or multipath; a powers of the clusters or multipath; an azimuth angle of departure for each cluster or multipath; an azimuth angle of arrival for each cluster or multipath; a zenith angle of arrival for each cluster or multipath; and/or a zenith angle of departure for each cluster or multipath.

The line of sight indicator can comprise a Boolean scalar. The number of clusters or multipaths can comprise an integer. The azimuth angle spread of departure can comprise a floating point scalar. The azimuth angle spread of arrival can comprise a floating point scalar. A zenith angle spread of departure can comprise a floating point scalar. The zenith angle spread of arrival can comprise a floating point scalar. The cross-polarization ratio can comprise a floating point scalar. The delays of the clusters or multipath can comprise a vector of floating point values. The powers of the clusters or multipath can comprise a vector of floating point values. The azimuth angle of departure for each cluster or multipath can comprise a vector of floating point values. The azimuth angle of arrival for each cluster or multipath can comprise a vector of floating point values. The zenith angle of arrival for each cluster or multipath can comprise a vector of floating point values. The zenith angle of departure for each cluster or multipath can comprise a vector of floating point values.

In operation 207, channel realizations can be generated based on the at least one prototype radio channel model and a dataset can be produced. In operation 208, a wireless model 221 can be trained using this dataset.

According to an example embodiment, the method further comprises validating the trained wireless model using at least one validation radio channel model.

According to an example embodiment, the method further comprises refining the at least one statistical parameter model based on the validation of the trained wireless model.

In operation 212, channel realizations can be generated, and a dataset produced. These can be used for validating the trained wireless models. This set of channel models can be different from those used for training the wireless model, since one should not use the same channel models for training and validation.

In operation 209, the performance of the models trained in operations 206 and 208 can be compared. Thus, the validity of the at least one statistical parameter model can be assessed. In response to the performance of the at least one statistical parameter model not being better than the performance of the at least one prototype radio channel model, the at least one statistical parameter model can be refined in operation 210. In response to the performance of the at least one statistical parameter model being better than the performance of the at least one prototype radio channel model, the at least one statistical parameter model can be output in operation 211. The distributions and statistical models 220 can be used to train the at least one statistical parameter model using a larger number of samples, for example, for a commercial product. Thus, there may be no need to go through the procedure of Fig. 2 once it has been established that the at least one statistical parameter model results in accurate wireless models.

According to an example embodiment, the method 100 further comprises evaluating the at least one statistical parameter model by comparing samples from the at least one statistical parameter model and samples from the at least one prototype radio channel model.

According to an example embodiment, the comparing samples from the at least one statistical parameter model and samples from the at least one prototype radio channel model comprises comparing the samples from the at least one statistical parameter model and the samples from the at least one prototype radio channel model using Kolmogorov-Smirnov test.

The validity of the statistical models of the key parameters can be evaluated, for example, using the Kolmogorov-Smirnov test, or any other method for comparing samples from different distributions, such as samples from the at least one prototype radio channel model and samples from the at least one statistical parameter model. A high score can indicate similarity of distributions, which can be desirable. The at least one statistical parameter model can also be refined based on the observed validation performance. An example of this is illustrated in the example embodiment of Fig. 2. The desired outcome of this invention is to obtain physical-layer ML receiver models that perform well, and poor validation performance can therefore be used as a basis for adjusting the statistical models of the considered stochastic channel model.

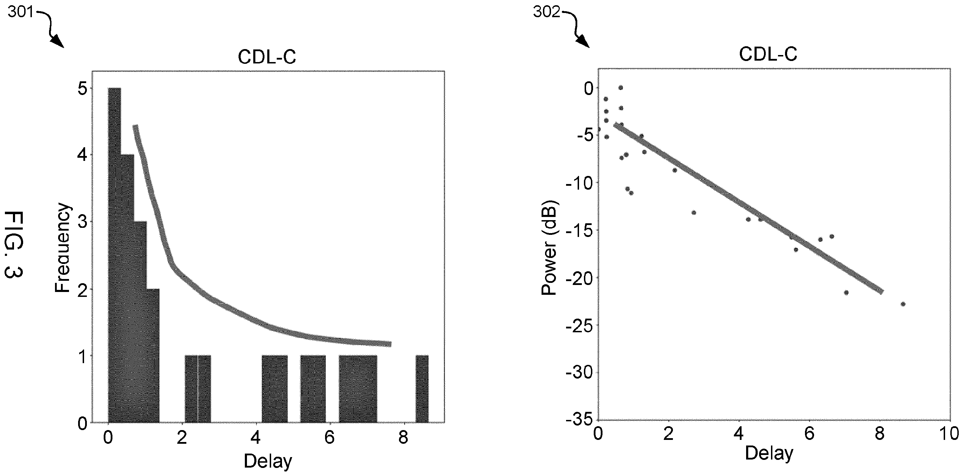

Fig. 3 illustrates a schematic representation of parameter samples and probability distributions according to an example embodiment.

The example embodiment of Fig. 3 illustrates a delay distribution 301 and power delay profile 302 of a CDL-C channel model. The corresponding distributions are also illustrated in the example embodiment of Fig. 3. Based on the samples obtained from the CDL-C model, used as the at least one prototype radio channel model, probability distributions can be assigned for each parameter. For example, in the example embodiment of Fig. 3, a gamma distribution is assigned for the delay distribution 301.

Other parameters, such as angle vectors can be generated in a similar way. For example, for angle vectors, a linear dependency to the power value of the corresponding multipath/cluster can be assumed. The angle values can also have a normally distributed stochastic component, which can introduce additional randomness.

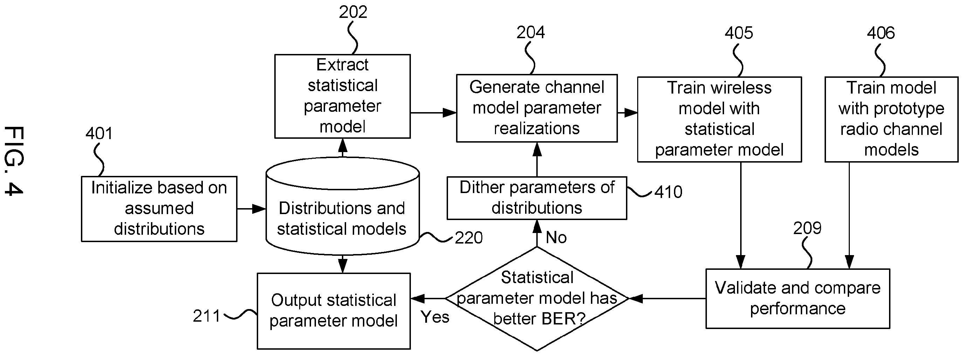

Fig. 4 illustrates a flow chart representation of statistical parameter model extraction and refinement according to an example embodiment.

In the example embodiment of Fig. 4, a wireless model is trained using a statistical parameter model in operation 405 and a wireless model is trained using a prototype model in operation 406. Operation 405 can comprise, for example, operations 205 - 206 and operation 406 can comprise operations 207 - 208. In the example embodiment of Fig. 4, operation 401 can comprise an initialization based on assumed distributions and operation 209 can comprise validation with measured data samples. Further, in the example embodiment of Fig. 4, the performance of these two trained wireless models be compared based on bit error rate (BER). In response to the BER not being better for the wireless model trained with the statistical parameter model, parameters of the distributions can be dithered in operation 410. Thus, the statistical parameter model can be refined 210 using dithering 410. For example, a poor performance (lower BER) can trigger a random dithering of the parameters of distributions of the channel model parameters, such as the parameters of the gamma-distributed delay values.

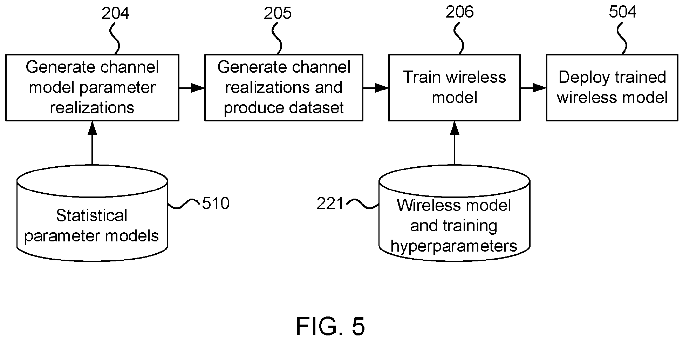

Fig. 5 illustrates a flow chart representation of wireless model training according to an example embodiment.

After the at least one statistical parameter model has been obtained, the wireless model can be trained, for example as illustrated in the example embodiment of Fig. 5. In operation 204, channel model parameter realizations can be generated using the at least one statistical parameter model 510. For example, the at least one statistical parameter model can be stored after operation 211 in the example embodiment of Fig. 2. In operation 205, a training dataset can be generated using channel model parameter realizations and the wireless model can be trained using the training dataset in operation 206. Once the wireless model has been trained, it can be deployed on the target hardware and used as, for example, a physical layer receiver in operation 504.

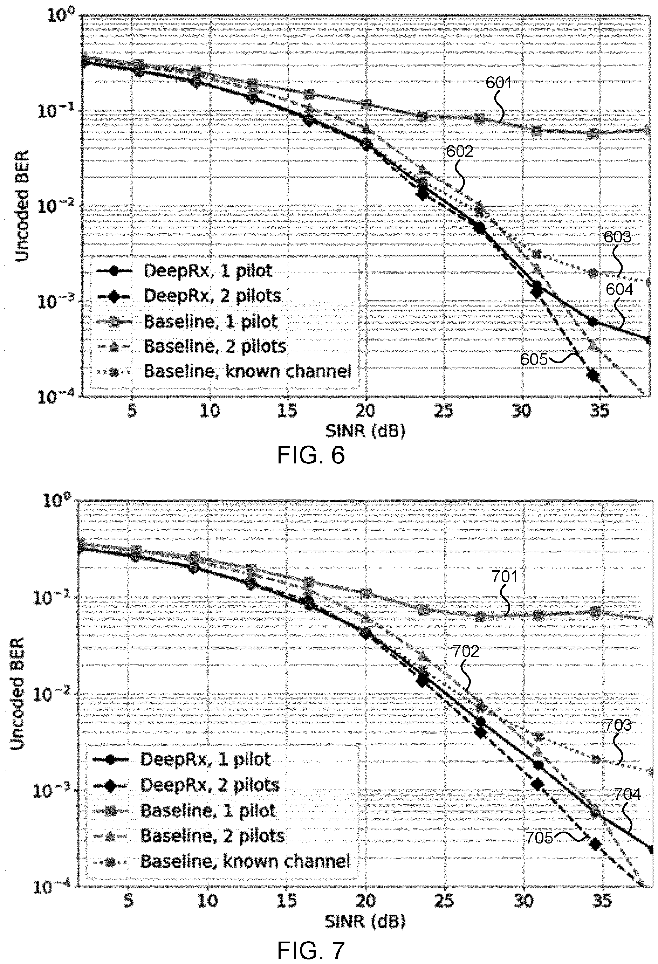

Fig. 6 illustrates a plot representation of simulation results according to an example embodiment.

In the example embodiment of Figs. 6 - 9, the method 100 was used to extract a statistical parameter model using the 3GPP defined CDL models (3GPP 38.901) as prototype radio channel models.

In the example embodiment of Fig. 6, a wireless model was trained and validated using CDL-A, CDL-B, and CDL-C channel models. Thus, this model has a benefit as it is trained and validated using the same channel models.

Curve 601 corresponds to a baseline receiver with one pilot, curve 602 corresponds to a baseline receiver with two pilots, curve 603 corresponds to a baseline receiver with a known radio channel, curve 604 corresponds to a receiver comprising a wireless model trained with the CDL-A/B/C models with one pilot, curve 605 corresponds to a receiver comprising a wireless model trained with the CDL-A/B/C model with two pilots.

Fig. 7 illustrates a plot representation of simulation results according to an example embodiment.

In the example embodiment of Fig. 7, a wireless model was trained using the method 100 and validated with CDL-A, CDL-B, and CDL-C channel models. Thus, this model was trained without any knowledge of the particulars of the validation channel models.

Curve 701 corresponds to a baseline receiver with one pilot, curve 702 corresponds to a baseline receiver with two pilots, curve 703 corresponds to a baseline receiver with a known radio channel, curve 704 corresponds to a receiver comprising a wireless model trained with the method 100 with one pilot, curve 705 corresponds to a receiver comprising a wireless model trained with the method 100 with two pilots.

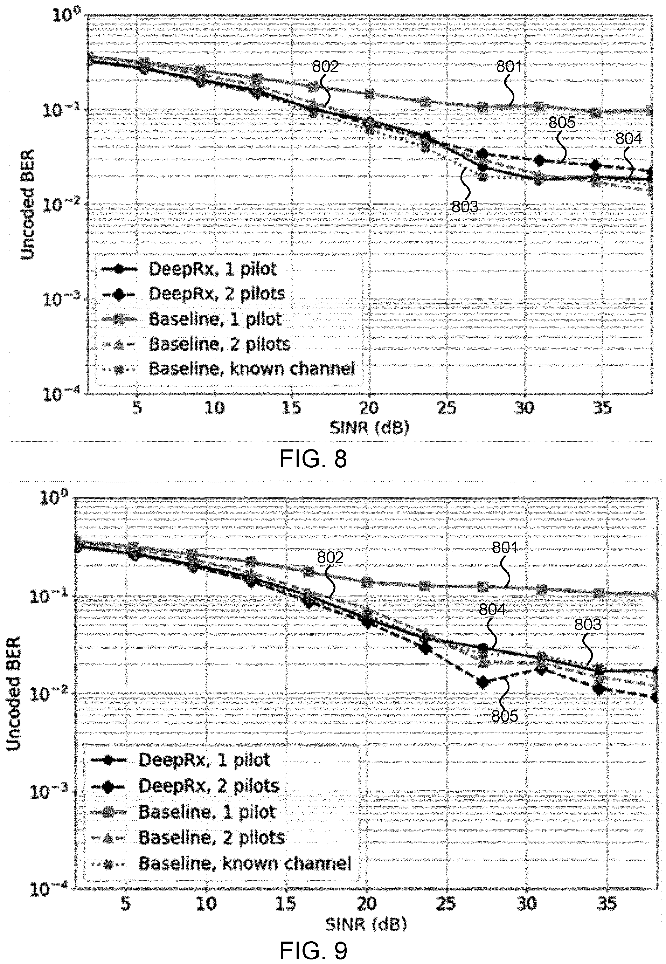

Fig. 8 illustrates a plot representation of simulation results according to an example embodiment.

In the example embodiment of Fig. 8, a wireless model was trained the with the CDL-A, CDL-B, and CDL-C channel models and validated using an urban micro (UMi) model.

Curve 801 corresponds to a baseline receiver with one pilot, curve 802 corresponds to a baseline receiver with two pilots, curve 803 corresponds to a baseline receiver with a known radio channel, curve 804 corresponds to a receiver comprising a wireless model trained with the CDL-A/B/C models with one pilot, curve 805 corresponds to a receiver comprising a wireless model trained with the CDL-A/B/C model with two pilots.

Fig. 9 illustrates a plot representation of simulation results according to an example embodiment.

In the example embodiment of Fig. 9, a wireless model was trained using the method 100 and validated with the UMi model.

Curve 901 corresponds to a baseline receiver with one pilot, curve 902 corresponds to a baseline receiver with two pilots, curve 903 corresponds to a baseline receiver with a known radio channel, curve 904 corresponds to a receiver comprising a wireless model trained with the method 100 with one pilot, and curve 905 corresponds to a receiver comprising a wireless model trained with the method 100 with two pilots.

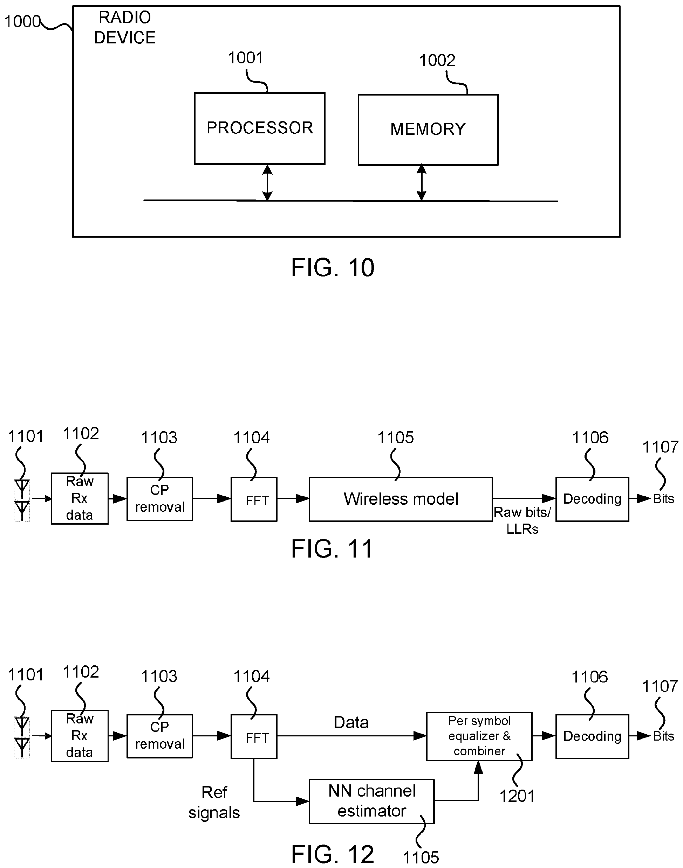

Fig. 10 is a block diagram of a radio device configured in accordance with an example embodiment.

The radio device 1000 may comprise one or more processors 1001 and one or more memories 1002 that comprise computer program code and a trained wireless model obtained using the method 100. The radio device 1000 may also comprise at least one antenna port, as well as other elements, such as an input/output module (not shown in FIG. 10), and/or a communication interface (not shown in FIG. 10).

According to an example embodiment, the at least one memory 1002 and the computer program code are configured to, with the at least one processor 1001, cause the radio device 1000 to receive and/or transmit a radio signal using the trained wireless model.

The receiving and/or transmitting a radio signal using the trained wireless model may comprise, for example, performing any processing relating to the receiving and/or transmitting the radio signal using the wireless mode. For example, the wireless model may be configured to perform various physical layer processing operations such as those disclosed in the example embodiments herein.

According to an example embodiment, the wireless model comprises a radio receiver model, a radio transmitter model, a physical layer receiver model, and/or a physical layer transmitter model.

According to an example embodiment, a client device comprises the radio device 1000.

According to an example embodiment, a network node device comprises the radio device 1000.

Although the radio device 1000 may be depicted to comprise only one processor 1001, the radio device may comprise more processors. In an example embodiment, the memory 1002 is capable of storing instructions, such as an operating system and/or various applications.

Furthermore, the processor 1001 may be capable of executing the stored instructions. In an example embodiment, the processor 1001 may be embodied as a multi-core processor, a single core processor, or a combination of one or more multi-core processors and one or more single core processors. For example, the processor 1001 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like. In an example embodiment, the processor 1001 may be configured to execute hard-coded functionality. In an example embodiment, the processor 1001 is embodied as an executor of software instructions, wherein the instructions may specifically configure the processor 1001 to perform the algorithms and/or operations described herein when the instructions are executed.

The memory 1002 may be embodied as one or more volatile memory devices, one or more non-volatile memory devices, and/or a combination of one or more volatile memory devices and non-volatile memory devices. For example, the memory 1002 may be embodied as semiconductor memories (such as mask ROM, PROM (programmable ROM), EPROM (erasable PROM), flash ROM, RAM (random access memory), etc.).

The radio device 1000 may be embodied in e.g., a mobile phone, a smartphone, a tablet computer, a smart watch, or any hand-held or portable device or any other apparatus, such as a vehicle, a robot, or a repeater.

The radio device 1000 may be embodied in, for example, a network node device, such as a base station (BS). The base station may comprise, for example, a gNB or any such device providing an air interface for client devices to connect to the wireless network via wireless transmissions.

When the radio device 1000 is configured to implement some functionality, some component and/or components of the radio device, such as the at least one processor 1001 and/or the memory 1002, may be configured to implement this functionality. Furthermore, when the at least one processor 1001 is configured to implement some functionality, this functionality may be implemented using program code comprised, for example, in the memory 1002. For example, if the radio device 1000 is configured to perform an operation, the at least one memory 1002 and the computer program code can be configured to, with the at least one processor 1001, cause the radio device 1000 to perform that operation.

Some terminology used herein may follow the naming scheme of 4G or 5G technology in its current form. However, this terminology should not be considered limiting, and the terminology may change over time. Thus, the following discussion regarding any example embodiment may also apply to other technologies.

Fig. 11 illustrates an example embodiment of the subject matter described herein illustrating block diagram of a radio device.

The radio device 1000 may be electrically coupled to one or more antennas 1101. The radio device 1000 may obtain raw received data 1102 from the one or more antennas 1101. The radio device 1000 may be configured to remove 1103 a cyclic prefix (CP) from the raw received data 1102. The radio device 1000 may be configured to perform a Fourier transform 1104, using for example fast Fourier transform (FFT), on the raw received data 1102.

The wireless model 1105 may take in the partially processed received waveform and output the information as, for example, the log-likelihood ratios (LLRs) or directly the decoded bits. In the former case, a separate decoder 1106 may be required to process the neural network output to obtain the information bits 1107. For example, low-density parity check (LDPC) decoder may be needed to obtain 5G uplink shared channel (UL-SCH) data. The wireless model 1105 can be trained to perform at least some functionality of the radio device 1000 by training with an appropriate training algorithm and data.

Many radio transmitters and receivers are based on orthogonal frequency-division multiplexing, where the symbols are modulated onto orthogonal subcarriers. For instance, in 5G systems, OFDM is used both in the uplink (UL) and in the downlink (DL), such that it is possible to multiplex different users into adjacent subcarrier blocks (orthogonal frequency division multiple access, OFDMA).

The wireless model 1105 may implement channel estimation (subcarrier demapping), equalization and LLR estimation (bit detection). Moreover, the radio device 1000 may be able to handle flexible demodulation reference signal (DMRS) configurations, multi-layer Multiple-Input and Multiple-Output (MIMO), and various modulation schemes, such as quadrature phase shift keying (QPSK) or quadrature amplitude modulation (QAM).

The wireless model 1105 may be implemented using a convolutional neural network (CNN). The wireless model 1105 may take in the received data after FFT 1104 and output LLRs or bit values. The CNN may be two dimensional and operate over the time and frequency axis. The CNN can simultaneously consider all subcarriers and symbols in a transmission time interval (TTI). This way, the convolutional filters in the CNN can implicitly handle correlations and/or impairments in time and frequency, which stem from the antenna configuration, multipath propagation, and mobility.

Sparse pilot symbols may only provide local information about the channel. It may be beneficial to allow the wireless model 1105 to utilize the unknown data and its known distribution for improved LLR estimation further away from the pilot locations. Thus, the LLR estimation may be improved when both data and pilot signals are input to the wireless model 1105 in a coherent fashion. This may allow the neural network to utilize both for carrying out LLR estimation. For example, the wireless model 1105 may learn some version of an advanced iterative receiver scheme.

Fig. 12 illustrates an example embodiment of the subject matter described herein illustrating block diagram of a radio device.

In the example embodiment of Fig. 12, the wireless model 1105 can perform channel estimation and interpolation. The channel estimate can be combined with the Fourier transformed data in equalizer and combiner 1201.

The example embodiments disclosed herein illustrate only some examples of the functionality the wireless model 1105 can perform in the radio device 1000. In other example embodiments, the wireless model can be configured and/or trained to function, for example, as a scheduler on top of a physical layer.

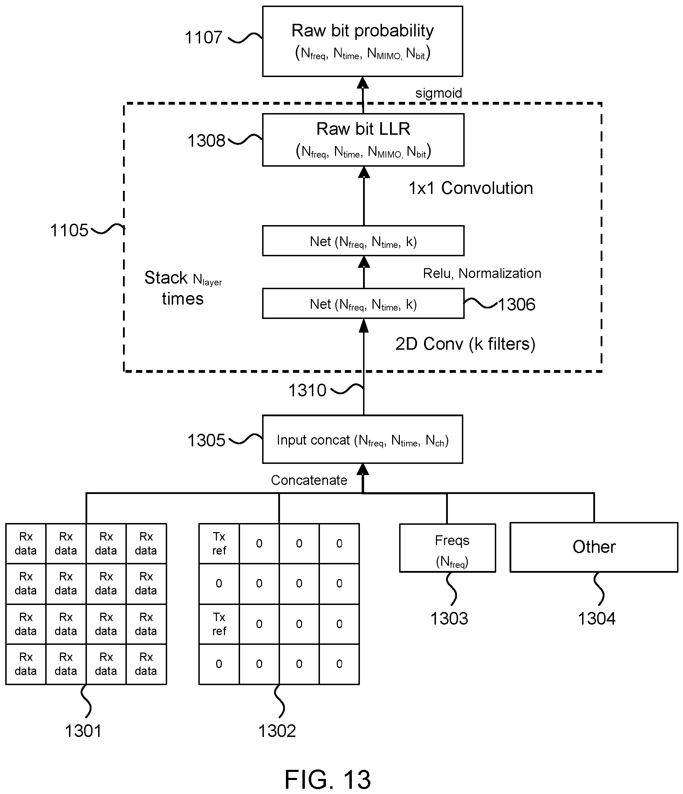

Fig. 13 illustrates an example embodiment of the subject matter described herein illustrating data flow in a wireless model.

The radio device 1000 may be configured to combine various information sources into the data 1310 fed into the wireless model 1105. For example, the radio device 1000 may concatenate 1305 various information sources to form the data 1310. After the concatenation 1305, the various information sources may correspond to convolutional channels of the data 1310. Thus, the information sources 1301 - 1304 may be concatenated in the depth dimension of the data 1310.

The data 1310 may also be referred to as wireless model input data or similar.

One-dimensional vectors and two-dimensional matrices may be expanded to three-dimensional arrays. Thus, a single three-dimensional array may be formed as the data 1310. The data 1310 may be fed into the wireless model 1105.

The data 1310 may comprise a data array 1301. The data array 1301 may be received Fourier transformed data. The data array 1301 may be obtained as the output of FFT 1104 in the example embodiment of Fig. 11.

The data array 1301 may be represented as a three-dimensional array with dimensions *N*_{freq} (number of subcarriers in the plurality of subcarriers) × *N*ₜᵢₘₑ (number of timeslots in the time interval) × *N*ₐₙₜ (the number of antenna streams). *N*ₜᵢₘₑ may be, for example, 14 in 5G.

The at least one memory and the computer program code may be further configured to, with the at least one processor, cause the radio device to obtain a reference signal array 1302 representing a reference signal configuration applied during a time interval. The data 1310 may further comprise the reference signal array 1302.

The reference signal array 1302 may represent reference signals (pilot configuration) that are applied during a time interval. The reference signal array 1302 may be used for channel estimation. For example, a single user case, the dimensions of the reference signal array 1302 may be *N*_{freq} × *N*ₜᵢₘₑ.

The reference signal array 1302 may comprise a plurality of reference signals, wherein a location in the reference signal array of each reference signal in the plurality of reference signals indicates a subcarrier of the reference signal and a timeslot of the reference signal. For example, in the example embodiment of Fig. 13, the reference signal array 1302 comprises two reference signals.

The reference signal array 1302 may further comprise a preconfigured indicator value in each location of the reference signal array 1302 not comprising a reference signal. The preconfigured indicator value may indicate that the corresponding element of the reference signal array 1302 does not comprise a reference signal. For example, in the example embodiment of Fig. 13, the reference signal array 1302 comprise zeros as the preconfigured indicator values.

An element of the reference signal array 1302 may be non-zero if the corresponding subcarrier and timeslot is a reference signal. The values of the non-zero elements may be filled with the reference signal values.

For MIMO, the reference signa array 1302 may be three-dimensional. Reference signal configurations for each MIMO channel using the same subcarrier frequency can be stacked in the depth dimension.

The at least one memory and the computer program code may be further configured to, with the at least one processor, cause the radio receiver to obtain a frequency array 1303 representing subcarrier frequencies of the plurality of subcarriers. The data 1310 may further comprise the frequency array 1303.

By feeding the frequencies of the subcarriers to the wireless model 1105, it may also be possible to process one time interval in multiple blocks over the frequency axis. This approach can be used to limit the size of the wireless model 1105 if computational resources of radio device are not sufficient to process whole time interval at once. Further, the physical properties of a wireless channel can depend on the frequency band. Thus, it may also be beneficial to allow the wireless model 1105 to utilize this information.

Dimensions of the frequency array 1303 may be *N*_{freq} × 1. The frequency array 1303 may comprise a vector representing subcarrier frequencies. This may provide information about the subcarrier frequencies for the wireless model 1105. This may allow the network to specialize some lower-level filters to act differently based on the subcarrier frequency. The frequency array 1303 may also add the capability to process any part of the frequencies separately, for instance because of hardware or load requirements.

The data may comprise a plurality of convolutional channels.

At least one convolutional channel in the plurality of convolutional channels of the data may correspond to the reference signal array.

At least one convolutional channel in the plurality of convolutional channels of the data may correspond to the frequency array.

The data 1310 may further comprise other information 1304. The other information 1304 may comprise, for example, information about the encoding, user equipment (UE) identifier, UE scheduling information etc.

After the concatenation 1305, the dimensions of the data 1310 may be *N*_{freq} × *N*ₜᵢₘₑ × *N*_{ch}, where *N*_{ch} is the number of convolutional channels. The number of convolutional channels may also be referred to as depth. Thus, after the concatenation 1305, different data types, such as the data array 1301, the reference signal array 1302, and the frequency array 1303, may be stacked in the convolutional channel / depth dimension of the data 1310.

The wireless model 1105 may comprise at least one two-dimensional convolutional layer operating in time and frequency directions. The wireless model 1105 may comprise a plurality of such convolutional layers.

Each convolutional layer in the wireless model 1105 may comprise k filters. The depth of each filter may be equal to the depth of the input of that layer. For example, the depth of each filter in the first layer of the wireless model 1105 may be *N*_{ch}. Thus, when each of the k filters is convoluted with the data 1310 in the frequency and time dimensions, a new three-dimensional array 1306 of size *N*_{freq} × *N*ₜᵢₘₑ × *k* may be produced.

Each filter in the wireless model 1105 may be, for example, of size 3×3 or of any other size.

The wireless model 1105 may comprise, for example 10 - 20 convolutional layers.

In the convolution operations of the wireless model 1105 zero padding may be used. Alternative padding schemes, such as period padding, may also be used. In some cases, it may be beneficial to use such a padding that the *N*_{freq} and *N*ₜᵢₘₑ dimensions remain constant through the wireless model 1105.

In the convolution operations of the wireless model 1105, after two-dimensional convolutions in the frequency and time dimensions, the results may be summed over the convolutional channel direction.

Alternatively or additionally, other type of convolution operations, such as depth wise separable convolution, may be implemented in the wireless model 1105.

The wireless model 1105 may further comprise nonlinearity, such as Rectified Linear Unit (ReLU), and possible normalization, such as batch normalization during training. Each convolutional layer in the wireless model 1105 may comprise a ReLU and/or other nonlinearity.

Each layer in the wireless model 1105 may comprise distinct weights. The weights may correspond to the elements of the filters. Weight may also be referred to as parameter, model parameter, or similar.

Convolutions may make it possible to handle correlations and/or impairments in time and frequency due to, for example, antenna configuration and mobility of UE (Doppler shift/spread). Convolutions may also improve interpolation of channel information over the time interval, since the channel estimates should be interpolated over those subcarriers and symbols where the actual data symbols are transmitted.

The wireless model 1105 may further comprise at least one residual block.

The output of the final convolutional layer can be fed to a 1x1 convolution that combines the output convolutional channels from two-dimensional convolutional layers producing bit LLRs 1308. The 1×1 convolutional layer may have ***N*_{MIMO}** × ***N*_{bit}** output channels, where ***N*_{MIMO}** is the number of MIMO layers and ***N*_{bit}** is the maximum number of bits per symbol. For example, for support up to 256QAM, ***N_{bit}* = 8*.***

The output of the wireless model 1105 may be reshaped to ***N*_{freq}** × ***N*ₜᵢₘₑ** × ***N*_{MIMO}** × ***N*_{bit}** elements and each element can be fed into the sigmoid function. The sigmoid function can output the output the probability 1107 of each bit being 1. The output array may comprise these probabilities.

Since the outputs of the sigmoid layer are the bit probabilities, the input to the sigmoid layer corresponds to LLRs with a possible multiplication with -**1** depending on the used convention. In other words, the output of the 1x1 convolution layer before the sigmoid may give the corresponding bit LLRs.

In some example embodiments, the wireless model 1105 may be configured to output bit LLRs 1308 in the output array. In some example embodiments, the wireless model 1105 may be configured to output bit probabilities in the output array. In some example embodiments, the wireless model 1105 may be configured to output bit values in the output array.

Any operations performed by the wireless model 1105 can be in complex or real domain. This may depend on, for example, the hardware the wireless model 1105 is implemented on. The disclosure herein may assume complex operations as the data array 1301 may be a Fourier transformed signal. For an implementation using real operations, the real and imaginary parts of a complex number can be fed to convolutional channels of the wireless model 1105. In such a case, the number of convolutional channels in the data 1310 may be doubled compared to the complex case.

The wireless model 1105, may process a whole TTI / code block as a single pass through the wireless model 1105. Thus, the wireless model 1105 can implicitly learn channel estimation and interpolation over the whole TTI. Moreover, processing the whole code block may be beneficial for the final decoding stage, since this may result in more accurate signal-to-noise ratio (SNR) estimation.

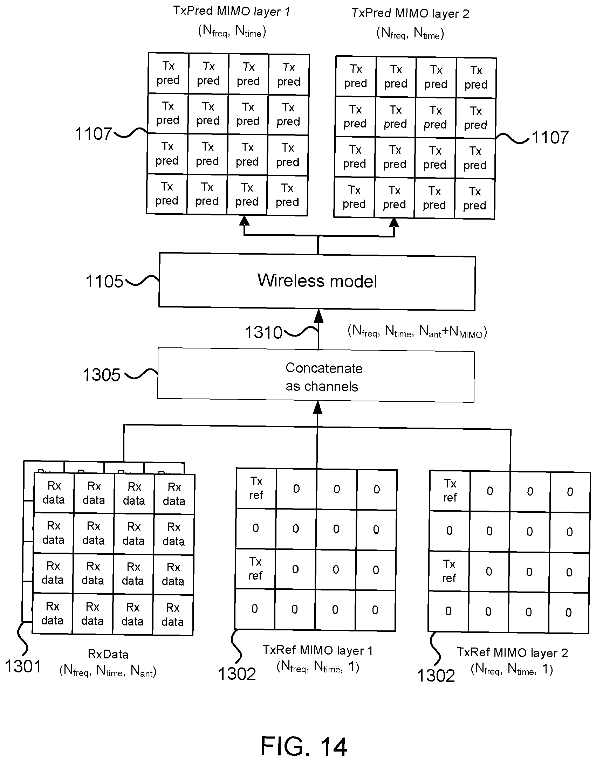

Fig. 14 illustrates an example embodiment of the subject matter described herein illustrating flow data in a wireless model configured for multiple-input and multiple-output (MIMO).

The data array 1301 may comprise a plurality of convolutional channels and data from a plurality of antenna streams, wherein each convolutional channel in the data array 1301 corresponds to an antenna stream in the plurality of antenna streams. The convolutional channels may also be referred to as input channels.

The reference signal array 1302 may comprise a plurality of convolutional channels, wherein each convolutional channel in the plurality of convolutional channels in the reference signal array 1302 corresponds to a layer of a MIMO transmission. The layers may be, for example, from a single user MIMO or mixed single- and multi-user MIMO.

In the example embodiment of Fig. 14, the data array 1301 comprises two convolutional channels. Each convolutional channel may correspond to a separate antenna stream. Furthermore, the reference signal array 1302 comprises two convolutional channels. Each convolutional channel may correspond to a MIMO layer.

The antenna streams of the data array 1310 and the MIMO layers of the reference signal array 1302 may be concatenated into the data 1310.

The example embodiment of Fig. 14 may apply to multi-user MIMO or single-user MIMO. In multi-user MIMO, the number of MIMO layers may correspond to the number of MIMO users.

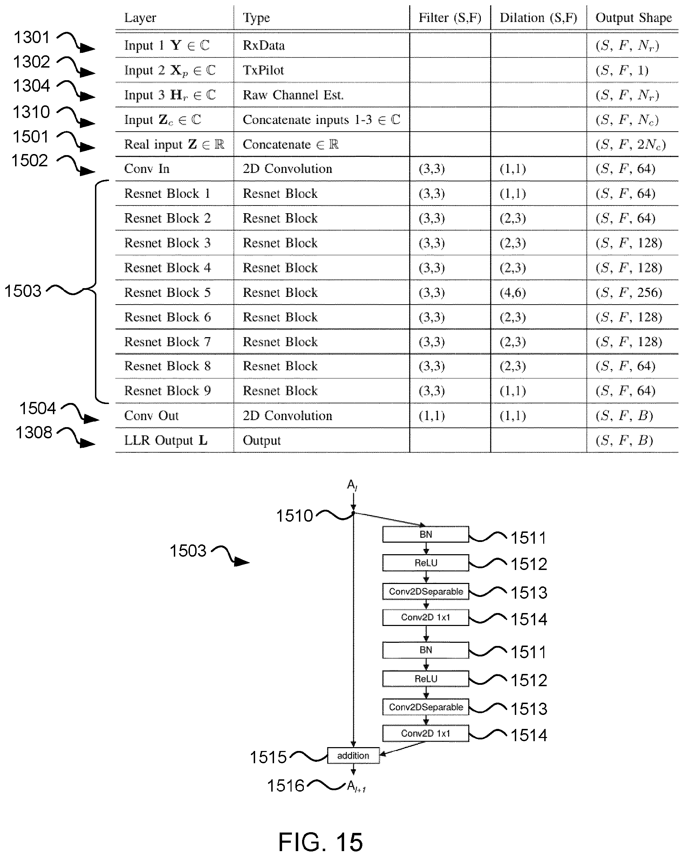

Fig. 15 illustrates another example embodiment of the subject matter described herein illustrating a table of neural network parameters and a residual network block.

In the example embodiment of Fig. 7, the wireless model 1105 comprises a neural network and a data array 1301, a reference signal array 1302, and a channel estimate array 1304 are concatenated to form the data 1310. The data 1310 is split into real and imaginary parts, which produces an array 1501 comprising double the number of convolutional channels compared to the complex data 1310.

The neural network of the example embodiment of Fig. 15 comprises a first convolutional layer 1502, nine residual network blocks 1503, and a 1x1 convolutional layer 1504. The 1x1 convolutional layer 1504 outputs the LLRs 1308.

In the example embodiment of Fig. 15, each residual network block 1503 comprises two batch normalization (BN) blocks 1511, two ReLU blocks 1512, two separable two-dimensional convolutional blocks 1513, and two 1x1 two-dimensional convolutional blocks 1514. The input 1510 of the residual network block 1503 is fed to a first BN block 1511, the output of the first BN block 1511 is fed into a first the ReLU block 1512, the output of the first ReLU block 1512 block is fed into a first separable two-dimensional convolutional block 1513, and the output of the first separable two-dimensional convolutional block 1513 is fed into a first 1x1 convolutional block 1514. The process is then repeated for the output of the first 1x1 convolutional block 1514 using a second BN block 1511, a second ReLU block 1512, a second separable two-dimensional convolutional block 1513, and a second 1x1 two-dimensional convolutional block 1514. The output of the second 1x1 two-dimensional convolutional block 1514 is then summed 1515 with the input 1510, producing the output 1516 of the residual network block 1503.

An apparatus may comprise means for performing any aspect of the method(s) described herein. According to an example embodiment, the means comprises at least one processor, and memory comprising program code, the at least one processor, and program code configured to, when executed by the at least one processor, cause performance of any aspect of the method.

The functionality described herein can be performed, at least in part, by one or more computer program product components such as software components. According to an example embodiment, the radio device comprises a processor configured by the program code when executed to execute the example embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and Graphics Processing Units (GPUs).

Any range or device value given herein may be extended or altered without losing the effect sought. Also any example embodiment may be combined with another example embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one example embodiment or may relate to several example embodiments. The example embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the example embodiments described above may be combined with aspects of any of the other example embodiments described to form further example embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various example embodiments have been described above with a certain degree of particularity, or with reference to one or more individual example embodiments, those skilled in the art could make numerous alterations to the disclosed example embodiments without departing from the spirit or scope of this specification.

## Claims

1. A method comprising:
obtaining at least one prototype radio channel model;
extracting at least one statistical parameter model based at least on the at least one prototype radio channel model, wherein the at least one statistical parameter model corresponds to at least one parameter of the at least one prototype radio channel model;
generating at least one synthetic radio channel model realization based at least on the at least one statistical parameter model; and
training a wireless model using the at least one synthetic radio channel model.

2. The method according to claim 1, the method further comprising validating the trained wireless model using at least one validation radio channel model.

3. The method according to claim 2, the method further comprising refining the at least one statistical parameter model based on the validation of the trained wireless model.

4. The method according to any preceding claim, wherein the at least one prototype radio channel model comprises at least one existing radio channel model and/or at least one radio channel measurement.

5. The method according to any preceding claim, wherein the extracting the at least one statistical parameter model based at least on the at least one prototype radio channel model comprises:
identifying at least one key parameter of the at least one prototype radio channel model; and
extracting the at least one statistical parameter model based at least on the identified at least one key parameter, wherein the at least one statistical parameter model corresponds to the at least one key parameter of the at least one prototype radio channel model.

6. The method according to any preceding claim, the method further comprising evaluating the at least one statistical parameter model by comparing samples from the at least one statistical parameter model and samples from the at least one prototype radio channel model.

7. The method according to claim 6, wherein the comparing samples from the at least one statistical parameter model and samples from the at least one prototype radio channel model comprises comparing the samples from the at least one statistical parameter model and the samples from the at least one prototype radio channel model using Kolmogorov-Smirnov test.

8. The method according to any preceding claim, wherein the extracting the at least one statistical parameter model based at least on the at least one prototype radio channel model comprises assigning a probability distribution for the at least one parameter of the at least one prototype radio channel model.

9. The method according to any preceding claim, wherein the training the wireless model using the at least one synthetic radio channel model comprises:
generating at least one synthetic radio channel model parameter realization based at least on the at least one synthetic radio channel model;
generating a training dataset using the at least one synthetic radio channel model parameter realization; and
training the wireless model based at least on the training dataset.

10. The method according to any preceding claim, wherein the wireless model comprises a radio receiver model, a radio transmitter model, a physical layer receiver model, and/or a physical layer transmitter model.

11. The method according to any preceding claim, wherein the at least one parameter of the at least one prototype radio channel model comprises at least one of:
a line of sight indicator;
a number of clusters or multipaths;
an azimuth angle spread of departure;
an azimuth angle spread of arrival;
a zenith angle spread of departure;
a zenith angle spread of arrival;
a cross-polarization ratio;
a delays of the clusters or multipath;
a powers of the clusters or multipath;
an azimuth angle of departure for each cluster or multipath;
an azimuth angle of arrival for each cluster or multipath;
a zenith angle of arrival for each cluster or multipath; and/or
a zenith angle of departure for each cluster or multipath.

12. A radio device, comprising:
at least one processor; and
at least one memory including computer program code and a trained wireless model obtained using the method according to any preceding claim;
the at least one memory and the computer program code configured to, with the at least one processor, cause the radio device to:
receive and/or transmit a radio signal using the trained wireless model.

13. A client device comprising the radio device according to claim 12.

14. A network node device comprising the radio device according to claim 12.

15. A computer program product comprising program code configured to perform the method according to any of claims 1 - 11, when the computer program product is executed on a computer.
